# DEMANDE DE BREVET EUROPEEN

(11) **EP 1 550 901 A1**
(43) Date de publication de la demande: **06.07.2005**
(21) Numéro de dépôt: 04364078.8
(22) Date de dépôt: 17.12.2004
(51) Int. Cl.: G02F 1/1333, H04B 10/17

(54) **Dispositif d'égalisation de la puissance optique et système correspondant**

(30) Priorité: 30.12.2003 FR 0315594
(71) Demandeur: Optogone, 29280 Plouzané (FR)
(72) Inventeur: Barge, Michel, 29290 Milizac (FR); Battarel, Denis, 29217 Plougonvelin (FR); De Bougrenet de la Tocnaye, Jean-Louis, 29820 Guilers (FR); Gautier, Pascal, 29200 Brest (FR); Tan, Antoine, 29200 Brest (FR)
(74) Mandataire: Bioret, Ludovic

(57) **Abrégé**

L'invention concerne un dispositif d'égalisation optique (312) d'au moins un faisceau optique incident (40) séparé en longueur d'onde en plusieurs canaux ou bandes spectrales dit faisceau optique démultiplexé, le dispositif comprenant au moins deux cellules commandables (420, 430, 440) indépendamment comprenant chacune des moyens de modulation spatiale en phase et des moyens de diffusion du ou des faisceaux optiques incident. Le dispositif est adapté à ce qu'au moins un des faisceaux démultiplexés (312) éclaire simultanément et sensiblement au moins deux des cellules (420, 430, 440).

L'invention concerne également un système correspondant.

## Description

### 1. Domaine de l'invention

La présente invention se rapporte au domaine des atténuateurs optiques variables sous forme notamment de barrettes ou de matrices pouvant être, par exemple, de type atténuateurs de gain ou de canaux.

### 2. Description de l'art antérieur.

Différentes techniques de l'art antérieur utilisent des matériaux à base de cristaux liquides pour la réalisation d'égaliseurs dynamiques de gain ou de canaux. Dans les modulateurs spatiaux en espace libre de l'état de l'art, le démultiplexage en longueur d'onde, λ, est généralement obtenu au moyen d'un élément dispersif (par exemple de type réseau, prisme etc.), une image démultiplexée en longueur d'onde se produisant sur un atténuateur variable spatialement. Outre la configuration optique, la partie principale repose ainsi sur l'utilisation d'un modulateur spatial constitué de cellules élémentaires (appelé également pixels) modulant un matériau électro-optique, par exemple de type cristal liquide ou composites.

On connaît, dans l'état de la technique, différentes configurations électro-optiques d'atténuateur variable spatialement à base de PDLC (de l'anglais « Polymer Dispersed Liquid Crystal » ou « Cristal liquide dispersé dans un polymère » en français) dont la concentration en cristal liquide et la taille des gouttelettes varient. Dans les modulateurs spatiaux utilisant des matériaux composites du type PDLC, le but est d'obtenir une atténuation sélective en bande spectrale avec une dynamique dans la gamme 10-15dB (pour l'égalisation de gain DGE) ou 35-40dB (pour les bloqueurs DCE).

Pour le fonctionnement optique macroscopique de la modulation à partir d'un PDLC, on distingue deux cas en fonction de la taille des gouttelettes de PDLC qui confère au PDLC des propriétés optiques distinctes :
- le cas du PDLC avec des gouttelettes d'une taille de l'ordre de la longueur d'onde, λ, du faisceau optique incident ou d'une taille supérieure ; et
- le cas du nano-PDLC avec des gouttelettes plus petites et dont la taille est proche du dixième de la taille de la longueur d'onde λ (ou inférieures).

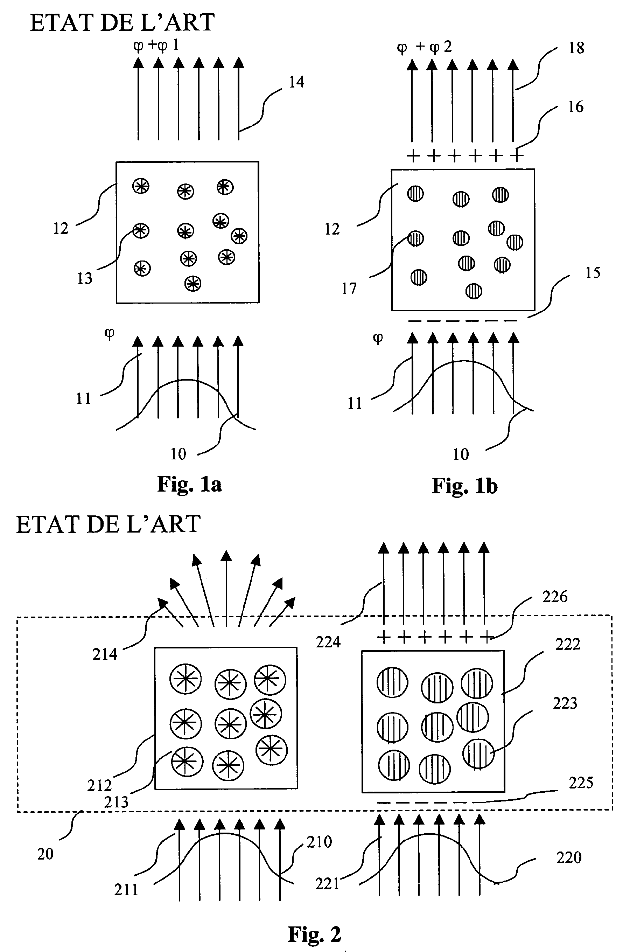

La **figure 2** décrit une barrette 20 comprenant deux cellules élémentaires 212 et 222 éclairées chacune par un faisceau incident respectivement 211 et 221. Les cellules 212 et 222 sont remplies de PDLC possédant des gouttelettes de taille supérieure ou comparable à la longueur d'ondes des faisceaux incidents (correspondant donc au premier cas). La cellule 212 contenant des gouttelettes 213 n'est soumise à aucun champ électrique. Les gouttelettes 213 sont donc orientées d'une manière quelconque et une onde lumineuse incidente correspondant au faisceau 211 voit des gouttelettes de cristal liquide (pour une taille de l'ordre de grandeur de λ), ce qui résulte en l'apparition d'un phénomène de diffusion. Le faisceau optique de sortie 214 est donc diffusé dans plusieurs directions.

Lorsqu'on applique une tension aux bornes d'une cellule, l'indice moyen du filtre varie et le phénomène de diffusion est accompagné d'un retard de phase isotrope fonction de l'indice moyen. Le matériau devient progressivement transparent sous un champ appliqué. On a donc pour chaque pixel, une modulation spatiale d'amplitude proportionnelle au champ électrique, accompagnée d'un retard fixe fonction du champ. Dans le cas où l'élément modulant est placé dans un plan image de la fibre d'entrée et recouvre tout le faisceau optique, ce retard se traduit par un simple défaut de focalisation qui peut être négligé.

Ainsi, des électrodes 225 et 226 placées transversalement (par rapport au faisceau optique incident 221) de part et d'autre de la cellule 222 permettent d'appliquer un champ électrique. Ce champ oriente les gouttelettes 223 de la cellule 222 de sorte que la cellule devient transparente pour l'onde lumineuse incidente. Le faisceau de sortie 224 n'est donc sensiblement pas diffusé.

Les **figures 1a et 1b** illustrent une cellule 12 contenant du nano-PDLC. Dans ce cas, une onde lumineuse incidente 10 ne voit pas les gouttelettes de cristal liquide (dont la taille est inférieure au dixième de λ) contenues dans la cellule 12, il n'y a plus de pertes par diffusion, mais une modulation d'indice.

Ainsi, selon la figure 1b, la cellule 12 est soumise à un champ électrique appliqué par des électrodes 15 et 16. Les gouttelettes 17 de nano-PDLC qu'elle contient sont alors orientées suivant ce champ et la cellule 12 est transparente pour le faisceau optique incident 11 qui est simplement déphasé d'une valeur ϕ2 correspondant à l'indice moyen associé à cette valeur de champ.

En revanche, selon la figure 1a, la cellule 12 n'est soumise à aucun champ. Bien que les gouttelettes 13 de nano-PDLC qu'elle contient soient orientées de manière quelconque, la cellule est toujours transparente. Le faisceau de sortie 14 n'est donc sensiblement pas diffusé contrairement au cas d'une utilisation de PDLC avec des gouttelettes de grande taille. Seul un déphasage de valeur ϕ1, correspondant à l'indice moyen sans champ, se produit.

Des structures à bases de cristal liquide, de nano-PDLC et de PDLC sont utilisées dans des systèmes optiques pour réaliser des égaliseurs de gain (DGE) ou de canaux (DCE ou bloqueurs).

Ainsi, on utilise du cristal liquide ou des nano-PDLC dans des cellules permettant un déphasage du signal optique (modulation de phase anisotrope pour le cristal liquide et isotrope pour le nano-PDLC), sans diffusion.

Dans ce cas, les cellules sont regroupées sous forme de barrette pouvant constituer des déphaseurs indépendants ou couplés.

Des structures barrettes à base de nano-PDLC sont constituées de pixels déphaseurs indépendants telles que la cellule 12 illustrée en regard des figures 1a et 1b. Chaque longueur d'onde ou bande spectrale éclaire un seul modulateur variable constitué d'une cellule 12 de nano-PDLC qui module la phase du faisceau incident (l'amplitude du faisceau incident 11 est représentée par la courbe 10, l'amplitude étant maximale sur la zone centrale de la cellule 12 et quasiment nulle sur les bords ou en dehors de la cellule). La position latérale de chaque cellule doit être contrôlée précisément de façon à s'assurer que cette condition est satisfaite. Cette structure ne présente d'intérêt que dans une configuration de type interférométrique. En effet, un tel dispositif est bien adapté à l'obtention de fortes dynamiques d'atténuation (supérieures à 30dB). Le modulateur permet d'introduire un retard fixe entre les deux bras de l'interféromètre. Un premier inconvénient de cette technique de l'art antérieur est celui d'un montage interférométrique qui est délicat à ajuster et sensible aux variations mécaniques et thermiques. Un autre inconvénient est qu'il nécessite des tensions élevées pour obtenir de grandes valeurs de déphasages (supérieurs ou égaux à π radians. A titre illustratif, un déphasage de π est obtenu avec du nano-PDLC d'épaisseur 20 *µ*m pour un champ électrique de 200Volts soit 6V/*µ*m.

Selon une technique divulguée dans le document de brevet WO 02071660 intitulé "Dynamic gain equalizer" (ou "égaliseur dynamique de gain" en français) déposé en mars 2002 au nom de la société Xtellus (marque déposée), des cellules à base de cristal liquide permettent de constituer un modulateur à déphasage variable. L'atténuation est obtenue par la création d'aberrations sur le faisceau optique incident dans le plan du modulateur. Contrairement au cas précédent où les cellules sont indépendantes, il est indispensable que le faisceau incident recouvre plusieurs pixels. On peut obtenir par ce biais de fortes dynamiques, moyennant des déphasages importants (supérieurs à π).

Par ailleurs les techniques basée sur un filtre de phase telles que décrites dans le document Xtellus (marque déposée) requièrent un positionnement très précis du sport sur le filtre, ce qui entraîne une contrainte sur l'alignement et l'ajustement. En outre, le système décrit dans ce document nécessite des moyens à diversité de polarisation.

Selon l'art antérieur, il existe également des atténuateurs basés sur un autre principe et utilisant des structures fortement diffusantes et peu déphasantes.

Ainsi, le document de brevet EP1207418 intitulé "Dynamic spatial equalizer based on a spatial light modulator" ("égaliseur dynamique spatial base sur un modulateur spatial de lumière" en français) et déposé au nom de la société Alcatel (marque déposée) divulgue une barrette 20 tel qu'illustré en regard de la figure 2. Comme indiqué précédemment, chacun des pixels 212 et 222 est adressé indépendamment et joue donc le rôle d'un atténuateur indépendant des autres pixels. Chaque longueur d'onde ou bande spectrale éclaire un atténuateur variable constitué d'une cellule PDLC (un pixel unique par longueur d'onde) ((les amplitudes des faisceaux incidents 211 et 221 sont respectivement représentées par les courbes 210 et 220, l'amplitude étant maximale sur la zone centrale de la cellule correspondante et quasiment nulle sur les bords ou en dehors de cette cellule). La position latérale des cellules 212 et 222 doit être contrôlée précisément de façon à s'assurer que les faisceaux incidents couvrent une seule cellule. Si l'on néglige les effets de champs transverses dus au voisinage d'autres pixels (ou de canaux), le phénomène de diffusion est prépondérant dans l'atténuation du signal réinjecté dans une fibre d'entrée. Ce phénomène est accompagné d'un retard de phase fixe qui n'agit pas sur la dynamique d'atténuation. L'avantage est l'utilisation d'un PDLC demandant de faibles tensions de commande. Cette technique présente néanmoins plusieurs inconvénients. Ainsi, de fortes dynamiques d'atténuation sont difficiles à obtenir (il faut augmenter les épaisseurs donc les tensions), par conséquent la fonction DGE est privilégiée. La consommation électrique est, en outre, relativement élevée. De plus, elle est mal adaptée au traitement d'un spectre continu, à moins de disposer d'une résolution spatiale très importante, c'est-à-dire comprenant beaucoup plus de pixels, ceux-ci étant de dimension plus petite, donc plus difficile à réaliser et plus coûteuse à gérer d'un point de vue électronique.

### 3. Présentation de l'invention

L'invention selon ses différents aspects a notamment pour objectif de pallier ces inconvénients de l'art antérieur.

Plus précisément, un objectif de l'invention est de fournir un égaliseur dynamique de gain et un système correspondant adapté à l'égalisation d'un faisceau optique possédant un spectre continu ou quasi-continu sur une large bande spectrale.

Un autre objectif de l'invention est de mettre en oeuvre un égaliseur pouvant être commandé avec des tensions relativement faibles et/ou avec une dynamique réduite et permettant d'obtenir des déphasages importants (notamment supérieurs à π radians).

L'invention a également pour objectif l'obtention d'un égaliseur optique relativement simple à mettre en oeuvre et de petite taille.

Ces objectifs ainsi que d'autres qui apparaîtront par la suite sont atteints, selon l'invention, à l'aide d'un dispositif d'égalisation optique d'au moins un faisceau optique incident séparé en longueur d'onde en plusieurs canaux ou bandes spectrales dit faisceau optique démultiplexé, le dispositif comprenant au moins deux cellules commandables indépendamment comprenant chacune des moyens de modulation spatiale en phase et des moyens de diffusion du ou des faisceaux optiques incident, remarquable en ce que le dispositif est adapté à ce qu'au moins un des faisceaux démultiplexés éclaire simultanément et sensiblement au moins deux des cellules.

Le faisceau éclairant sensiblement au moins deux cellules signifie ici que l'énergie n'est pas concentrée avec une concentration supérieure à 99% sur une seule cellule.

Ainsi, un canal ou une bande spectrale éclaire sensiblement au moins deux cellules qui sont commandées en phase séparément et permettent donc une modulation spatiale en phase et une atténuation par diffusion distincte sur chacune de cellules. Ainsi, selon l'invention, on dispose de plusieurs degrés de liberté qui permettent d'ajuster finement l'atténuation désirée, tout en ayant des tensions de commandes (et donc une consommation) relativement faibles pour un déphasage qui peut être élevé.

En outre, l'invention offre les avantages d'une combinaison de moyens de modulation spatiale en phase et de moyens de diffusion sans les inconvénients propres à une utilisation isolée de ces moyens. Ainsi, l'invention permet d'obtenir une forte gamme d'atténuation, sans des contraintes fortes de positionnement et de tension.

De plus, l'invention peut être mise en oeuvre sous forme de barrettes ou de matrices, chaque élément des barrettes ou matrices comprenant plusieurs cellules et étant éclairé par un ou plusieurs faisceaux démultiplexés.

Selon une caractéristique particulière, le dispositif est avantageusement adapté à ce qu'au moins un des faisceaux démultiplexés éclaire simultanément et sensiblement trois des cellules.

Le faisceau éclairant sensiblement au moins trois cellules signifie implique que l'énergie n'est pas concentrée avec une concentration supérieure à 99% sur deux cellules.

Un dispositif avec des faisceaux démultiplexés éclairant simultanément trois cellules permet de s'affranchir des contraintes géométriques et est suffisant pour obtenir une égalisation facile à commander. En outre, une mise en oeuvre avec trois cellules commandables indépendamment éclairées par un canal ou une bande spectrale permet de gérer facilement les problèmes de recouvrement.

D'une manière générale, avec deux cellules éclairées simultanément par un canal ou une bande spectrale, on obtient déjà une séparation des commandes de déphasage et de diffusion et donc une liberté pour piloter le dispositif d'égalisation. Lorsque le nombre de pixels (ou cellules) éclairés simultanément augmente, le nombre de degrés de liberté augmente également.

Préférentiellement, le dispositif est remarquable en ce que les bandes spectrales consécutives du faisceau optique démultiplexé se recouvrent en partie sur au moins une des cellules.

Ainsi, on obtient une atténuation quasi continue du spectre de longueur d'onde sur les parties qui se recouvrent.

Selon des caractéristiques avantageuse, le dispositif est remarquable en ce que les moyens de modulation spatiale et les moyens de diffusion comprennent un matériau composite de type cristal liquide dans un polymère.

Un matériau composite de type cristal liquide dans un polymère ou PDLC présente l'avantage d'être optimisé pour minimiser les pertes et maximiser le déphasage et la dynamique d'atténuation dans une utilisation avec éclairement de plusieurs cellules par un faisceau démultiplexé.

En outre, un dispositif à PDLC est relativement simple à fabriquer, notamment dans une configuration de type barrette ; dans une configuration de type barrette ou matrice, des électrodes de commandes permettent de distinguer les cellules de PDLC par pixelisation, le PDLC correspondant à plusieurs cellules étant notamment mis en oeuvre dans une structure élémentaire ou dans plusieurs structures élémentaires, chacune étant associée à une cellule.

Selon une caractéristique particulière, le dispositif est remarquable en ce que le matériau comprend des gouttelettes de cristal liquide dont la taille est supérieure au dixième de la longueur d'onde incidente.

Pour une utilisation dans le domaine des télécommunications (soit dans la gamme 1450 à 1620 nm), la taille des gouttelettes est supérieure à environ 150 nm.

Selon une caractéristique préférentielle, le dispositif est remarquable en ce que le matériau comprend des gouttelettes de cristal liquide dont la taille est sensiblement égale à la longueur d'onde incidente.

Pour une utilisation dans le domaine des télécommunications (soit dans la gamme 1450 à 1620 nm), la taille des gouttelettes est sensiblement comprise entre 800 nm et 2 µm.

Selon une caractéristique avantageuse, le dispositif est remarquable en ce que le matériau possède une concentration en cristal liquide comprise entre 75 et 80%.

Selon une caractéristique particulière, le dispositif est remarquable en ce que les moyens de modulation spatiale et les moyens de diffusion comprennent un matériau semi-conducteur massif.

Selon une caractéristique particulière, le dispositif est remarquable en ce que les moyens de modulation spatiale et les moyens de diffusion sont de type à multiples puits quantiques.

Ainsi, l'utilisation de matériau à multiples puits quantiques ou MQW (de l'anglais « Multiple Quantum Well ») (mettant en jeu un phénomène d'électro-absorption) permet de réduire très fortement les temps de réponse (typiquement quelques centaines de nano-secondes pour les matériaux à multiples puits quantiques, contre quelques centaines de micro-secondes pour les PDLC).

L'invention concerne également un système caractérisé en ce qu'il comprend des moyens de multiplexage en longueur d'onde et un dispositif tel que décrit précédemment selon l'invention.

Ainsi, le système est relativement bien adapté à une application d'égalisation en fonction d'une longueur d'onde ou de canal.

Selon une caractéristique particulière, le système est mis en oeuvre en espace libre.

Une utilisation en espace libre permet notamment un plus grand parallélisme et le traitement d'un plus grand nombre de canaux ou de bandes spectrales (notamment supérieur à 32).

Les avantages du système sont les mêmes que ceux du dispositif d'égalisation optique, ils ne sont pas détaillés plus amplement.

### 4. Description détaillée d'un mode de réalisation de l'invention.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1a, 1b et 2 présentent des structures optiques à bases de nano-PDLC et de PDLC connues en soi ;
- la figure 3 illustre un modulateur spatial optique selon un mode de réalisation conforme à l'invention;
- la figure 4 décrit une barrette de cellules mise en oeuvre dans le modulateur de la figure 3;
- la figure 5 présente une barrette de cellules selon un autre mode de réalisation de l'invention.

Le principe général de l'invention repose sur l'utilisation de PDLC dans une barrette de plusieurs cellules, un ou plusieurs faisceaux optiques incidents éclairant plusieurs cellules. L'utilisation d'un PDLC lorsque le signal optique recouvre plusieurs pixels permet de conjuguer les effets de l'atténuation par diffusion et de la création d'une aberration de phase, avec des déphasages relativement importants et faciles à obtenir. Il est à noter que le contrôle de la modulation de phase n'est pas indépendant de la modulation d'amplitude (il s'agit donc d'un cas particulier de modulation d'amplitude complexe). On obtient ainsi une combinaison de la modulation de l'intensité et d'une modulation spatiale de phase.

A titre d'exemple, selon l'invention, on obtient avec une cellule élémentaire et avec un PDLC standard d'épaisseur 20 *µ*m une atténuation de l'ordre de 5dB et une variation de phase supérieure à π sous une tension de 40Volts soit un champ électrique de 2V/µm.

Une optimisation du composite entre diffusion déphasage (optimisation de la taille des gouttelettes notamment) peut être effectuée. L'optimum peut être obtenu en choisissant au mieux les concentrations et le procédé d'insolation UV.

Un PDLC est caractérisé par une dispersion de gouttelettes de cristal liquide dans une matrice polymère avec un diamètre moyen de l'ordre de 1 à 4 µm. Il est obtenu, par exemple, par polymérisation à une longueur d'onde comprise entre 340 et 400 nm, préférentiellement 365 nm, d'un monomère photopolymérisable avec un flux optique de 15 à 100 mW/cm² pour une concentration typique en cristal liquide de 75 à 80%.

Un nano-PDLC est caractérisé par une dispersion de gouttelettes de cristal liquide dans une matrice polymère avec un diamètre moyen beaucoup plus faible et de l'ordre de 50 à 150 nm. Il est obtenu, par exemple, avec les mêmes constituant que le PDLC par polymérisation à une longueur d'onde comprise entre 340 et 400 nm, préférentiellement 365 nm, d'un monomère photopolymérisable avec un flux optique de 100 à 350 mW/cm² pour une concentration typique en cristal liquide de 65 à 70%.

Ainsi, c'est la taille des gouttelettes qui permet de différentier le PDLC et le nano-PDLC, cette taille dépendant, lors de la fabrication, de la concentration initiale de cristal liquide, de la puissance de l'insolation UV et de la concentration des mélanges.

Compte tenu de la plus forte concentration en cristal liquide dans un PDLC (vis-à-vis d'un nano-PDLC), le déphasage résultant est plus fort que dans le cas du nano-PDLC pour une même épaisseur de cellule. Un déphasage équivalent sera donc obtenu pour une épaisseur plus faible. Cet aspect ajouté à l'existence de forces d'ancrage plus faibles conduit à l'emploi de tensions inférieures au cas du nano-PDLC et une utilisation avantageuse du PDLC dans le cadre de l'invention.

Selon l'invention, un compromis peut être trouvé entre les deux phases, en jouant sur la concentration de cristal liquide notamment.

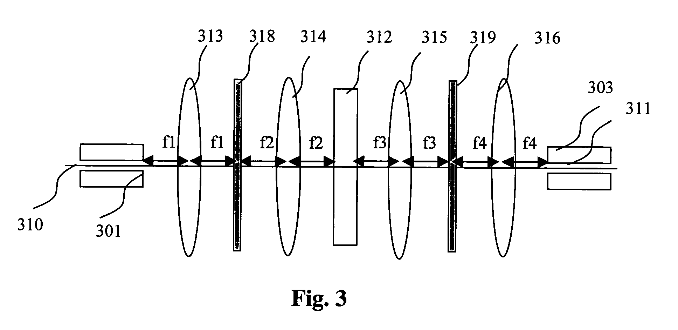

La **figure 3** illustre un DSE (de l'anglais « Dynamic Spatial Equalisor » ou « modulateur spatial de lumière » en français) qui regroupe des dispositifs de type DCE (« Dynamic Channel Equaliser » ou « égaliseur dynamique de canal » en français) ou DGE (« Dynamic Gain Equaliser » ou « égaliseur dynamique de gain » en français) en espace libre comprenant une barrette de filtres 312, selon l'invention, placée entre deux fibres optiques monomodes 301 et 303 permettant respectivement la propagation d'un faisceau incident 310 et d'un faisceau de sortie 311 (montage en transmission).

Plus précisément, le DSE comprend successivement :
- une fibre d'entrée 310 véhiculant un faisceau optique 310 ;
- un premier système d'imagerie adapté à créer une image démultiplexée spatialement du faisceau optique 310 (en fonction de ses longueurs d'ondes) sur le filtre 312 ;
- la barrette de filtres 312 ;
- un second système d'imagerie adapté à créer une image multiplexée à l'entrée d'une fibre de sortie 303 à partir de l'image du faisceau traversant la barrette de filtres 312 ; et
- la fibre de sortie 303 véhiculant un faisceau 311 égalisé par la barrette de filtres 312 en fonction des longueurs d'ondes du faisceau incident 310, permettant ainsi d'adapter, si nécessaire, la taille du faisceau aux dimensions du pixel du modulateur spatial.

Selon une variante de l'invention, des moyens de collimation sont placés entre la fibre d'entrée 301 et le premier système d'imagerie et entre le second système d'imagerie et la fibre de sortie 303. Ces moyens de collimation sont préférentiellement accolés aux fibres respectivement d'entrée 301 et de sortie 303. Ils permettent notamment un ajustement de la taille du faisceau.

Le premier système d'imagerie comprend successivement:
- une lentille 313 de distance focale *f1* située à la distance *f1* de la sortie de la fibre 301 ;
- un démultiplexeur 318 (par exemple un prisme ou un réseau) adapté à démultiplexer spatialement le faisceau incident en fonction de sa ou de ses longueurs d'onde, et situé à la distance *f1* de la lentille 313, le faisceau incident étant donc imagé sur le démultiplexeur 318 ;
- une lentille 314 de distance focale *f2* située à la distance f2 du démultiplexeur 318 et de la barrette de filtres 312, le faisceau démultiplexé étant donc imagé (avec ses composantes spectrales séparées spatialement) sur la barrette 312.

Le second système d'imagerie comprend successivement:
- une lentille 315 de distance focale *f3* située à la distance *f3* de la barrette 312 ;
- un multiplexeur 319 (par exemple un prisme ou un réseau) adapté à multiplexer le faisceau incident égalisé par la barrette 312 en fonction de ses composantes spectrales, et situé à la distance *f3* de la cette dernière ;
- une lentille 316 de distance focale *f4* située à la distance *f4* du multiplexeur 319 et de la fibre de sortie 303, le faisceau multiplexé et égalisé étant donc imagé sur la fibre de sortie 303.

Selon des variantes de réalisation du système illustré en regard de la figure 3, des éléments optiques adaptés à réaliser une fonction propre au système (notamment un élément démultiplexeur de longueur d'onde) sont introduits dans les plans focaux des lentilles des systèmes d'imagerie (en remplacement ou en sus de multiplexeurs/démultiplexeurs 318 et 319).

On notera par ailleurs qu'avec ce principe, deux configurations avec ou sans recouvrement des faisceaux optiques incidents sont envisageables, en jouant par exemple sur la taille du faisceau et/ou sur le pouvoir dispersif du réseau, avec une conséquence sur le choix de fonctions réalisables (DGE versus DCE par exemple).

Selon une autre variante de l'invention correspondant à un montage replié (ou en réflexion), le DSE comprend un miroir accolé à la barrette de filtres 312, le faisceau incident étant renvoyé alors vers le démultiplexeur 318 qui a alors une fonction de multiplexage vis-à-vis du faisceau réfléchi, les lentilles 313 et 314 et une fibre de sortie.

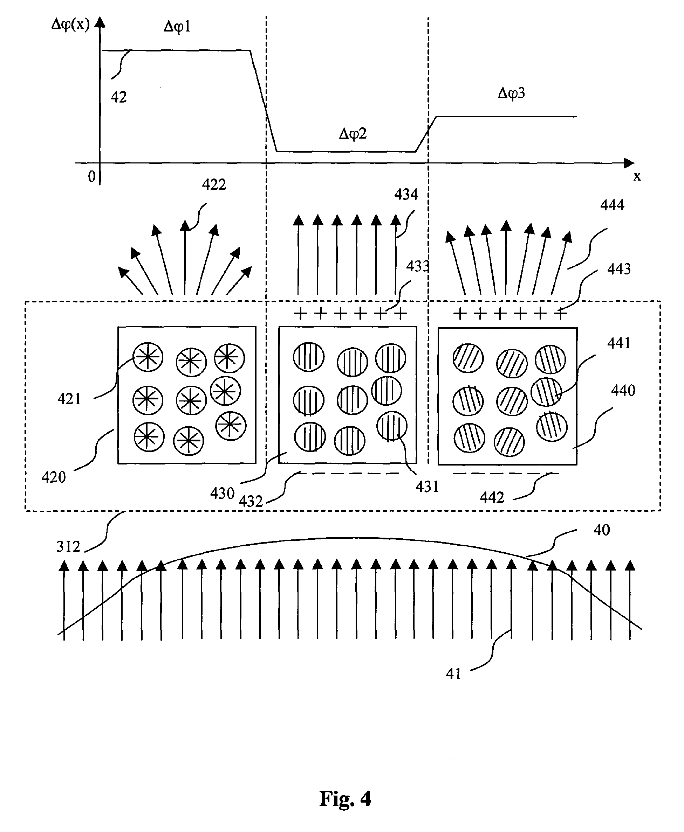

Selon la première configuration illustrée en regard de la figure 4, la barrette 312 est traversée par un faisceau optique 41 incident dont au moins une partie éclaire (illustrée par son amplitude 40 d'enveloppe gaussienne) plusieurs cellules 420, 430 et 440 de la barrette 312 et comprenant chacune du PDLC, sans recouvrement entre les longueurs d'ondes ou bandes spectrales indépendantes du faisceau incident 40. Cette configuration est particulièrement adaptée au mode sélection égalisation de canal (DCE).

Chacune des cellules 420, 430 et 440 peut être commandée indépendamment des autres cellules par des électrodes transverses placées de part et d'autres de la cellule correspondante. A titre illustratif, la cellule 420 n'est soumise, à un instant donné, à aucun champ électrique. Les gouttelettes 421 de PDLC qu'elle contient diffusent donc le faisceau incident 41, le faisceau de sortie 422 étant en outre fortement déphasé d'une valeur Δϕ1 (le déphasage Δϕ(x) des faisceaux de sortie étant représenté sur courbe 42 en fonction de l'axe longitudinal de dispersion *Ox*, en montrant la variation spatiale sur cet axe). La cellule voisine 430 est soumise à un champ électrique relativement fort de l'ordre de 40Volts pour une épaisseur de cellule de 20 µm. Les gouttelettes 431 de PDLC qu'elle contient sont toutes orientées de sorte qu'elles sont transparentes pour le faisceau incident 41. Le faisceau de sortie 434 correspondant est alors déphasé d'une valeur minimale Δϕ2 et conserve la même direction de propagation que le faisceau incident 41 (pas de diffusion). La cellule suivante 440 est soumise à un champ électrique relativement moins fort de l'ordre de 20Volts pour la même épaisseur de cellule de 20 *µ*m. Les gouttelettes 441 de PDLC qu'elle contient sont toutes orientées de sorte que la cellule correspondante est semi-transparente pour le faisceau incident 41. Le faisceau de sortie 444 correspondant est alors déphasé d'une valeur intermédiaire Δϕ3 et est légèrement diffusé.

La modélisation du contrôle de la modulation d'amplitude de l'amplitude complexe par la tension est optimisée en fonction des spécifications du système souhaité (en particulier, la raideur ou pente de l'atténuation et la résolution spectrale sont des paramètres libres pouvant être adaptés à la demande). La tension à appliquer est ajustée par une étude théorique ou, préférentiellement, au moyen d'une contre-réaction optique. Ainsi, on ajuste les meilleures associations de tension, par exemple, à l'aide d'un montage mettant en oeuvre, une source optique (par exemple un laser), la barrette 312, une source de tension et de moyens d'affichage optique de l'atténuation résultante (à l'aide de la contre-réaction optique).

Selon une variante de réalisation de l'invention, la taille des gouttelettes peut-être ajustée de sorte à optimiser le rapport atténuation/déphasage donnée comme un degré de liberté supplémentaire.

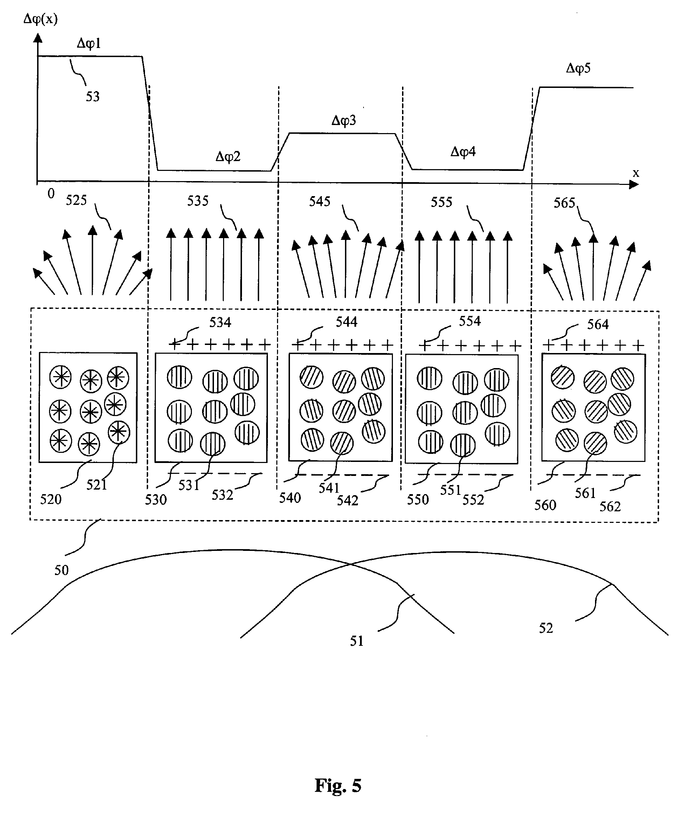

Selon la seconde configuration illustrée en regard de la **figure 5**, une égalisation quasi continue du spectre est obtenue grâce au recouvrement partiel de plusieurs faisceaux optiques incidents 51 et 52 et avec par conséquent la mise en commun de pixels (et donc différente dans son principe du brevet EP1207418 de la société Alcatel (marque déposée) précédemment cité).

Un nombre optimal de pixels par bande / pixels en commun est déterminé en fonction des spécifications du système. Pour une largeur de bande spectrale donnée, ce paramètre est ajusté en jouant sur la dispersion de l'élément dispersif et/ou sur la taille du faisceau optique au moyen d'un système de grandissement (correspondant par exemple à la variante décrite précédemment, qui met en oeuvre des moyens de collimation entre la fibre d'entrée et le premier système d'imagerie et entre le second système d'imagerie et la fibre de sortie).

Selon la première configuration illustrée en regard de la figure 5, la barrette 312 est remplacée par une barrette 50 dans le système illustré en regard de la figure 3.

La barrette 50 est traversée par au moins deux faisceaux optiques incidents 51 et 52 distincts (dont seule l'amplitude est représentée sur la figure 5), chacun d'eux éclairant plusieurs cellules (520, 530, 540 pour le faisceau 51 et 540, 550 et 560 pour le faisceau 52) de la barrette 312 et comprenant chacune du PDLC, la cellule 540 étant éclairées par les deux faisceaux. Il y a donc recouvrement entre les longueurs d'ondes ou bandes spectrales des faisceaux incidents 51 et 52 sur au moins une cellule de la barrette 50. Cette configuration est particulièrement adaptée au mode sélection égaliseur dynamique de gain ( ou DGE).

Chacune des cellules de la barrette 50 est commandée indépendamment des autres cellules par des électrodes transverses (532, 542, 552, 562, 534, 544, 554 et 564) placées de part et d'autres de la cellule correspondante. A titre illustratif, la cellule 520 n'est soumise, à un instant donné, à aucun champ électrique. Les gouttelettes 521 de PDLC qu'elle contient diffusent donc le faisceau incident 51, le faisceau de sortie 525 étant en outre fortement déphasé d'une valeur Δϕ1 (le déphasage Δϕ des faisceaux de sortie étant représenté sur courbe 53). A un instant donné, la cellule voisine 530 est soumise à un champ électrique relativement fort de l'ordre de 40Volts pour une épaisseur de cellule de 20 *µ*m. Les gouttelettes 531 de PDLC qu'elle contient sont toutes orientées de sorte qu'elles sont transparentes pour le faisceau incident 51. Le faisceau de sortie 535 correspondant est alors déphasé d'une valeur minimale Δϕ2 et conserve la même direction de propagation que le faisceau incident 51 (pas de diffusion). La cellule suivante 540 est soumise à un champ électrique relativement moins fort de l'ordre de 20Volts pour la même épaisseur de cellule de 20 *µ*m*.* Les gouttelettes 541 de PDLC qu'elle contient sont toutes orientées de sorte qu'elles sont semi-transparentes pour les faisceaux incidents 51 et 52. Le faisceau de sortie 545 (et comportant une contribution des deux faisceaux 51 et 52) correspondant est alors déphasé d'une valeur intermédiaire Δϕ3 et est légèrement diffusé. La cellule suivante 550 est soumise elle-même à un champ électrique fort est a le même comportement vis-à-vis du faisceau 52 que la cellule 530 vis-à-vis du faisceau 51 (faisceau de sortie déphasé d'une valeur minimale Δϕ4 et conservant la même direction de propagation que le faisceau incident 52 (pas de diffusion)). La cellule suivante 560 soumise à un champ moyen déphase d'une valeur intermédiaire Δϕ5 et est légèrement diffusé.

En pratique, pour passer de la configuration illustrée en figure 4 à celle présentée en regard de la figure 5, il est possible de conserver la même barrette 312 modifiant la taille du spot incident et/ou le pouvoir de dispersion qui peuvent être ajustés pour permettre le recouvrement souhaité. Toutefois, une barrette avec une taille différente de pixel peut être utile pour permettre un meilleur ajustement des paramètres optiques.

Bien entendu, l'invention n'est pas limitée aux exemples de réalisation mentionnés ci-dessus.

En particulier, le principe proposé, mettant en oeuvre une modulation d'amplitude complexe, peut être notamment être étendu, selon l'invention, à d'autres matériaux électro-optiques, notamment des semi-conducteurs massifs fonctionnant à une longueur d'onde légèrement inférieure au gap ou des semi-conducteurs à puits quantiques (MPQ).

En outre, l'homme du métier pourra apporter toute variante dans la forme des regroupement de cellules qui, selon l'invention, peuvent être agencée sous forme de barrettes (cellules placées suivant une seule dimension sensiblement perpendiculaire au(x) faisceau(x) incident(s)) ou de matrices (cellules placées suivant deux dimensions dans un plan transverse du(des) faisceau(x) incident(s)).

## Revendications

1. Dispositif d'égalisation optique (312, 50) d'au moins un faisceau optique incident (40, 51, 52) séparé en longueur d'onde en plusieurs canaux ou bandes spectrales dit faisceau optique démultiplexé, ledit dispositif comprenant au moins deux cellules commandables (420, 430, 440, 520, 530, 540, 550, 560) indépendamment comprenant chacune des moyens de modulation spatiale en phase et des moyens de diffusion dudit ou desdits faisceaux optiques incident, **caractérisé en ce que**
ledit dispositif est adapté à ce qu'au moins un desdits faisceaux démultiplexés (312, 51) éclaire simultanément et sensiblement au moins deux desdites cellules (420, 430, 440, 520, 530, 540)
et **en ce que** lesdites bandes spectrales consécutives (51, 52) dudit faisceau optique démultiplexé se recouvrent en partie sur au moins une desdites cellules (540).

2. Dispositif selon la revendication 1, **caractérisé en ce que** ledit dispositif est adapté à ce qu'au moins un desdits faisceaux démultiplexés éclaire simultanément et sensiblement trois desdites cellules.

3. Dispositif selon l'une quelconque des revendications 1 et 2, **caractérisé en ce que** lesdits moyens de modulation spatiale et lesdits moyens de diffusion comprennent un matériau composite de type cristal liquide (421, 431, 441, 521, 531, 541, 551, 561) dans un polymère.

4. Dispositif selon la revendication 3, **caractérisé en ce que** ledit matériau comprend des gouttelettes de cristal liquide dont la taille est supérieure au dixième de la longueur d'onde incidente.

5. Dispositif selon la revendication 4, **caractérisé en ce que** ledit matériau comprend des gouttelettes de cristal liquide dont la taille est sensiblement égale à la longueur d'onde incidente.

6. Dispositif selon l'une quelconque des revendications 3 à 5, **caractérisé en ce que** ledit matériau possède une concentration en cristal liquide comprise entre 75 et 80%.

7. Dispositif selon l'une quelconque des revendications 1 et 2, **caractérisé en ce que** lesdits moyens de modulation spatiale et lesdits moyens de diffusion comprennent un matériau semi-conducteur massif.

8. Dispositif selon l'une quelconque des revendications 1 et 2, **caractérisé en ce que** lesdits moyens de modulation spatiale et lesdits moyens de diffusion sont de type à multiples puits quantiques.

9. Système **caractérisé en ce qu'**il comprend des moyens de multiplexage en longueur d'onde et un dispositif selon l'une quelconque des revendications 1 à 8.

10. Système selon la revendication 9, **caractérisé en ce qu'**il est mis en oeuvre en espace libre.
